# DEMANDE DE BREVET EUROPEEN

(11) **EP 0 575 269 A1**
(43) Date de publication de la demande: **22.12.1993**
(21) Numéro de dépôt: 93420247.4
(22) Date de dépôt: 15.06.1993
(51) Int. Cl.: H02G 3/26, F16L 3/22, F16L 3/24

(54) **Dispositif pour suspendre les chemins de câbles**

(30) Priorité: 17.06.1992 FR 9207606
(71) Demandeur: MAVIL, F-21430 Liernais (FR)
(72) Inventeur: Simon, Bernard, F-69300 Caluire (FR)
(74) Mandataire: Karmin, Roger

(57) **Abrégé**

Le dispositif pour suspendre les chemins de câbles comprend un montant vertical (2, 2') dont l'âme (22, 22') est percée d'une série de trous (23, 23') qui permettent la fixation de consoles (4, 4', 4'') qui sont solidaires d'un talon (5, 5' et 9') qui est percé d'au moins un trou oblong (53, 53' et 93'') qui coopère avec ceux de l'âme (22, 22') pour le passage d'une vis (6) recevant un écrou (7) en vue de la fixation de deux consoles tête-bêche soit au même niveau, soit à des niveaux différents.

## Description

La présente invention a trait à un dispositif pour suspendre les chemins de câbles au plafond, et appelé plus communément dans la technique "pendard".

On connaît des dispositifs de ce genre qui comprennent généralement un tube à section carrée dont l'une des extrémités libres est solidaire d'une platine pour la fixation dudit tube au plafond. Sur l'une des faces verticales du tube est rapportée au moyen de vis et écrous une cornière dont les ailes sont respectivement percées d'une série de trous co-axiaux entre eux.

Entre les ailes de la cornière sont fixées des consoles en forme d'équerre par l'intermédiaire de goupilles qui traversent l'ensemble de part en part, c'est-à-dire les deux ailes de la cornière et le corps de la console. Les consoles comportent chacune une face horizontale qui permet la fixation de tronçons de chemin de câbles connus en soi pour supporter par exemple des câbles électriques.

Dans certains cas, les consoles en forme d'équerre doivent être montées l'une en face de l'autre, c'est-à-dire tête-bêche. Pour cela, il faut ajouter une seconde cornière semblable à la première sur la face du tube qui se trouve à l'opposé de celle déjà utilisée. Les consoles sont fixées de la même manière au moyen de goupilles.

Ce genre de dispositif comporte certains inconvénients en ce qui concerne leur coût de fabrication et leur complexité de montage pour aligner deux consoles au même niveau.

On connaît aussi d'autres dispositifs qui comprennent un montant vertical présentant un profil en forme de C dont les extrémités sont légèrement refermées de manière à constituer une glissière. A l'intérieur de la glissière sont fixées des consoles en forme d'équerre afin que leurs faces horizontales soient perpendiculaires au fond du montant. Les consoles sont retenues par l'intermédiaire de vis qui permettent de les pincer entre le fond du montant et les extrémités du profil en forme de C. Dans certain cas, les consoles peuvent être montées l'une en face de l'autre, c'est-à-dire tête-bêche. Pour cela, le montant vertical présente un profilé en double C dont les bords sont légèrement refermés pour constituer une glissière sur chacune des faces dudit montant.

Les consoles sont fixées de la même manière que précédemment soit au même niveau, soit décalées l'une par rapport à l'autre.

De tels dispositifs comportent certains inconvénients en ce qui concerne les risques de glissement des consoles à l'intérieur des glissières sous le poids des câbles électriques placés dans les chemins de câbles prévus à cet effet. De plus, l'opérateur rencontre de grandes difficultés pour fixer les consoles au niveau requis.

C'est à tous ces inconvénients qu'entend particulièrement remédier la présente invention.

Le dispositif suivant la présente invention a pour but de concevoir un montant vertical qui présente un profil permettant la fixation des consoles par boulonnage. Le montant est conçu pour recevoir deux consoles tête-bêche au même niveau ou à des niveaux différents et de les fixer au moyen d'un seul boulonnage, de manière à réduire le temps de montage.

Le dispositif pour suspendre les chemins de câbles suivant la présente invention comprend un montant vertical dont l'âme est percée d'une série de trous qui permettent la fixation d'au moins une console qui est solidaire d'un talon sensiblement conformé comme le profil du montant et qui comprend au moins un trou oblong qui coopére avec ceux de l'âme pour le passage d'un boulon.

Le dessin annexé, donné à titre d'exemple, permettra de mieux comprendre l'invention, les caractéristiques qu'elle présente et les avantages qu'elle est susceptible de procurer :

Fig. 1 est une vue en perspective éclatée illustrant le dispositif suivant la présente invention.

Fig. 2 est une coupe transversale suivant II-II (fig. 1), montrant le profilé particulier du dispositif suivant la présente invention.

Fig. 3 est une vue en perspective éclatée représentant une variante du dispositif pour suspendre les chemins de câbles.

Fig. 4 à 6 sont des coupes transversales suivant IV-IV (fig. 3) illustrant les différentes solutions pour la fixation des consoles sur le dispositif de fig. 3.

Fig. 7 et 8 sont des vues montrant la mise en place d'une console particulière sur le montant vertical du dispositif de (fig. 3).

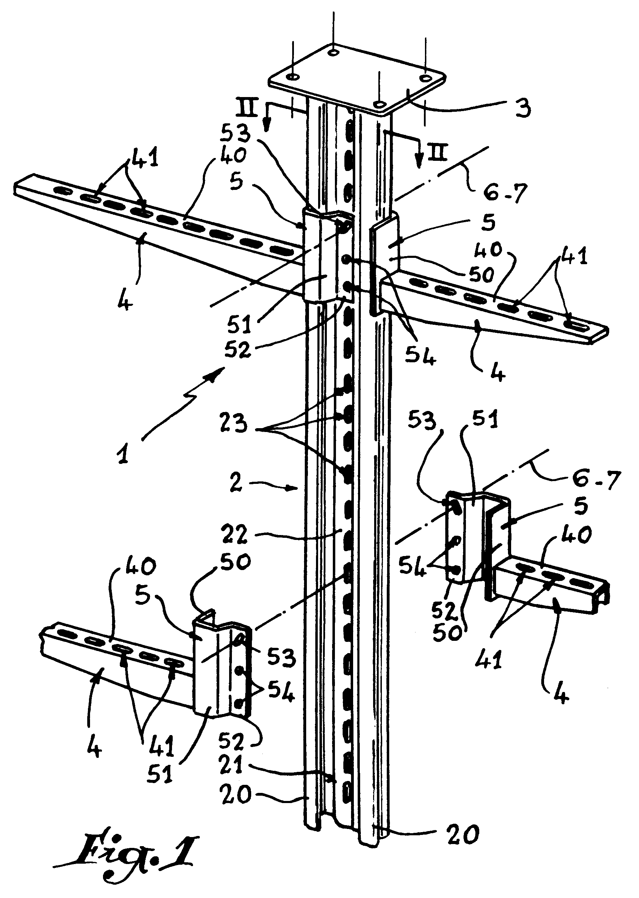

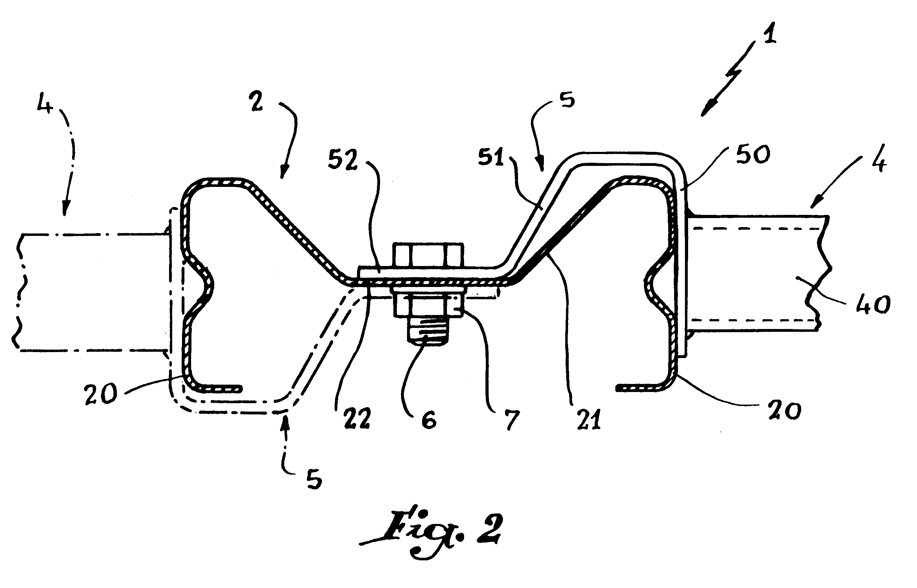

On a représenté en fig. 1 et 2 un dispositif 1 pour suspendre au plafond d'un bâtiment les chemins de câbles connus en soi.

Le dispositif comprend un montant vertical 2 dont l'une des extrémités libres est solidaire d'une platine horizontale 3 en vue de sa fixation au plafond du bâtiment. Le montant vertical 2 présente un profil particulier dont les ailes 20 sont parallèles l'une à l'autre et réunies entre elles par un voile 21 en forme de cuvette, afin que la partie centrale 22 dudit voile formant l'âme du montant soit dans un plan perpendiculaire et médian par rapport aux ailes 20. L'âme 22 du montant est percée d'une série de trous débouchants 23 disposés suivant l'axe vertical géométrique de ce dernier.

Des consoles 4 en forme de cornière comportent chacune une face horizontale 40 perforée de trous 41 pour la retenue des tronçons des chemins de câbles, non représentés. A l'une des extrémites libres de la console 4 et perpendiculairement à la face 40 est soudé un talon 5 conformé en point d'interrogation de manière à être sensiblement identique à une partie du profil du montant vertical 2 et plus particulièrement à celle comprise entre l'une des ailes 20 et l'âme 22.

Le talon 5 comprend une paroi 50 qui est prévue perpendiculaire à la face supérieure 40 de la console 4 et s'étendant verticalement par rapport à celle-ci. La paroi 50 est solidaire d'un voile 51 qui est conformé de manière que sa partie extrême 52 soit dans un plan perpendiculaire et médian à ladite paroi. La partie extrême 52 est percée d'un trou oblong 53 et de trous circulaires 54 disposés les uns au-dessus des autres suivant un même axe vertical et dont le nombre n'est pas limitatif. Le trou oblong 53 est prévu incliné par rapport à un axe vertical afin de constituer un système auto-bloquant lors de la mise en place des consoles 4 sur le montant vertical 2.

Les trous circulaires 54 correspondent à ceux 23 ménagés dans l'âme 22 du montant 2 pour permettre la fixation de deux consoles 4 tête-bêche soit au même niveau, soit à des niveaux différents.

A cet effet, on constate, lors de la fixation d'une console 4 sur le montant vertical 2, que la paroi 50 de son talon 5 vient en appui contre le bord 20, tandis que la partie extrême 52 du voile 51 se trouve parallèle à l'âme 22, de manière que l'un au moins des trous 23 corresponde avec celui oblong et incliné 53 ménagé dans ladite partie extrême 52. L'alignement des trous 23 et 53 permet la mise en place d'une vis 6 et d'un écrou 7 pour l'immobilisation de la console 4 sur le montant 2. Cette immobilisation est amélioree par le système auto-bloquant, c'est-à-dire par l'inclinaison du trou 53 et de la paroi 50 qui retiennent la console 4 perpendiculairement au montant 2 avant son serrage définitif.

On note que des consoles 4 peuvent être fixées de part et d'autre du montant vertical 2, de la même manière que décrite précédemment.

Dans le cas où deux consoles 4 sont montées tête-bêche et au même niveau, celles-ci sont fixées par un seul et même boulon 6-7 qui traverse les parties extrêmes 52 de chaque console 4 et l'âme 22 du montant, comme représenté en fig. 2. La fixation de ces deux consoles 4 est améliorée par le système auto-bloquant qui permet à l'opérateur d'agir avec simplicité et de gagner un temps de montage précieux.

En outre, deux consoles 4 sont fixées tête-bêche à des niveaux différents mais suffisamment rapprochées pour que le trou oblong et incliné 53 de la première console et l'un des trous 54 de la seconde console soient alignés avec un même trou 23 du montant 2, de manière qu'on n'utilise qu'un seul boulon 6-7 en vue de les retenir.

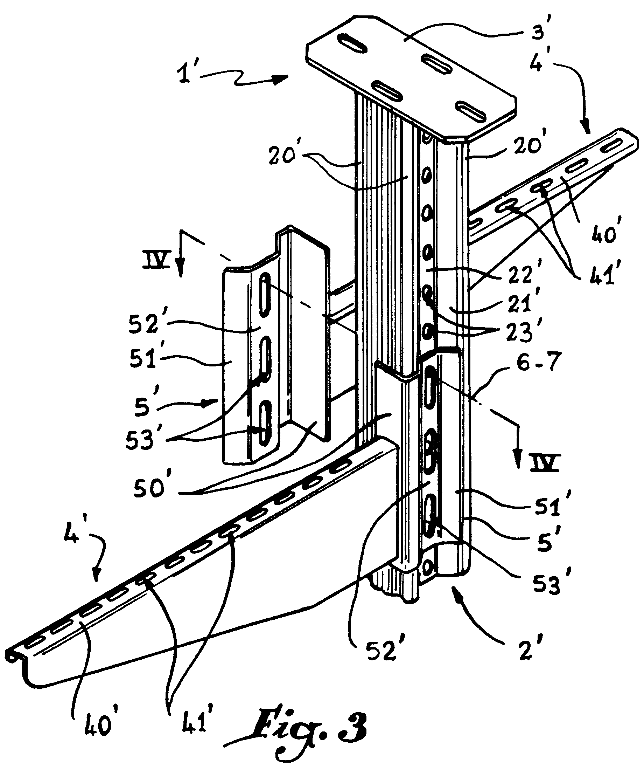

On a représenté en fig. 3 une variante du dispositif 1 référencé 1' pour suspendre au plafond d'un bâtiment les chemins de câble connus en soi.

Le dispositif comprend un montant vertical 2' dont l'une des extrémités libres est solidaire d'une platine horizontale 3' en vue de sa fixation au plafond du bâtiment. Le montant vertical 2' est constitué par l'intermédiaire de deux montants 2 décrits précédemment qui sont soudés l'un à l'autre pour former en section un profil sensiblement carré. En effet, le montant 2' comporte de chaque côté de son axe de symétrie vertical des ailes 20' qui sont parallèles l'une à l'autre et réunies entre elles par un voile 21' en forme de cuvette. Chaque voile 21' comprend une partie centrale 22' formant l'âme du montant de manière que chaque âme 22' soit dans un plan perpendiculaire et médian par rapport aux ailes 20' .

Chaque âme 22' du montant 2' est percée d'une série de trous débouchants 23' disposés suivant l'axe vertical géométrique de ce dernier.

Des consoles 4' en forme de cornière comportent chacune une face horizontale 40' perforée de trous 41' pour la retenue des tronçons de chemin de câble non représentés. A l'une des extrémités libres de la console 4' et perpendiculairement à la face 40' est soudé un talon 5' conformé de manière à être sensiblement identique à une partie du profil du montant vertical 2' et plus particulièrement à celles comprises entre ses deux ailes 20' .

Le talon 5' comprend une paroi 50' qui est prévue perpendiculaire à la face supérieure 40' de la console 4' et s'étendant verticalement par rapport à celle-ci. La paroi 50' est solidaire d'un voile 51' qui est complémentaire à celui 21' du montant 2' comme on le verra mieux plus loin. Le voile 51' est conformé de manière que sa partie centrale 52' soit dans un plan perpendiculaire et médian par rapport à la paroi 50' La partie centrale 52' est percée de trous oblongs 53' disposés les uns au-dessus des autres suivant un même axe vertical et dont le nombre n'est pas limitatif.

On constate que sous la pression de serrage du boulon 6-7 le voile 51' vient se pincer à l'intérieur du voile 21' du montant vertical 2' . Le profil complémentaire du voile 51' permet un auto-serrage de la console 4' par rapport au montant vertical 2' . Le pincement du voile 51' à l'intérieur du voile 21' permet d'éviter un glissement de la console 4' par rapport au montant vertical 2' lorsque celle-ci reçoit une charge trop élevée. De plus on remarque que la partie centrale 52' du talon 5' est légèrement écartée de l'une 22' du montant 2' .

On note que des consoles 4' peuvent être fixées de part et d'autre du montant vertical 2' de la même manière que décrite précédement.

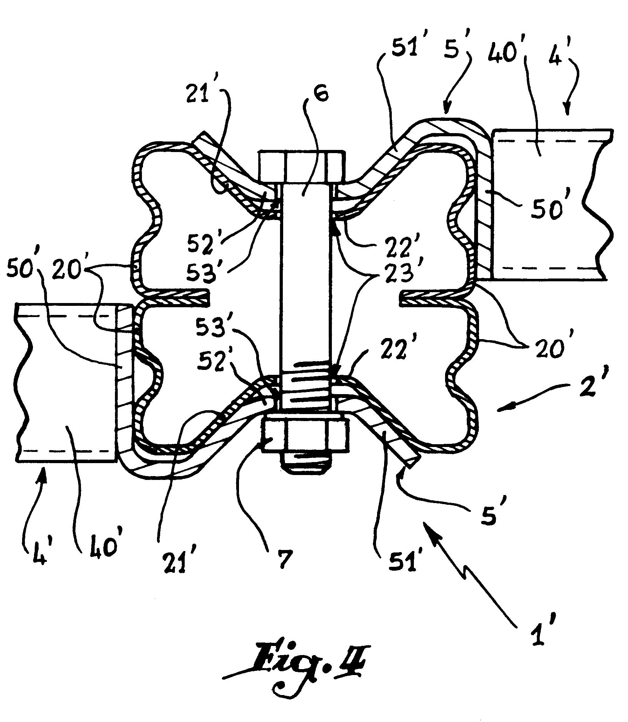

Dans le cas ou deux consoles 4' sont montées tête-bêche et au même niveau, celles-ci sont fixées par un seul et même boulon 6-7 qui traverse les parties centrales 52' de chaque console 4' et les âmes 22' du montant 2' comme representé en fig. 4. La fixation de ces deux consoles 4' est améliorée par l'effet de pincement lors du serrage du boulon 6-7.

En outre deux consoles 4' sont fixées tête-bêche à des niveaux différents mais suffisament rapprochées pour que les trous oblongs 53' de chaque console soient alignés avec un même trou 23' du montant 2', de manière qu'on n'utilise qu'un seul boulon 6-7.

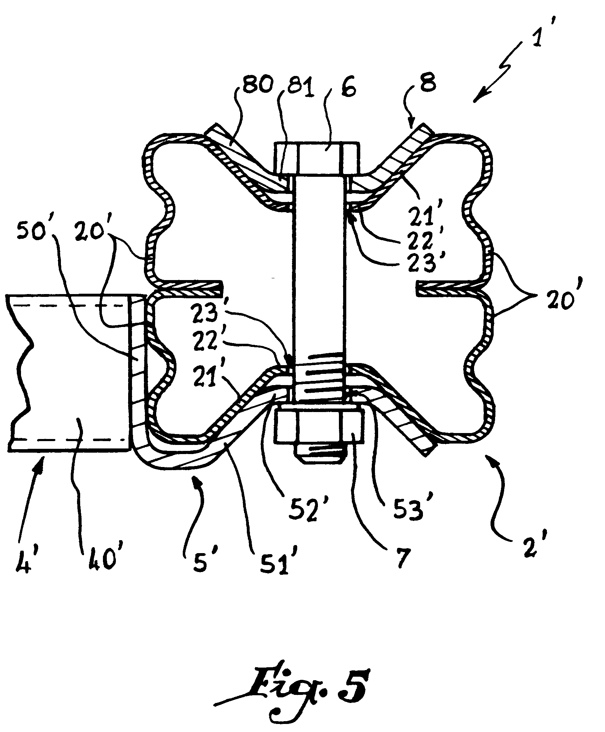

En fig. 5, on a montré la mise en place d'une seule console 4' dont le talon 5' et plus particulièrement son voile 51' est logé à l'intérieur d'un des voiles 21' du montant vertical 2' tandis que dans l'autre voile 21' est placée une contre-butée 8 permettant le serrage et le pincement du talon 5' . La contre-butée 8 présente un voile 80 et une partie centrale 81 complémentaire aux voiles 21' du montant vertical 2' .

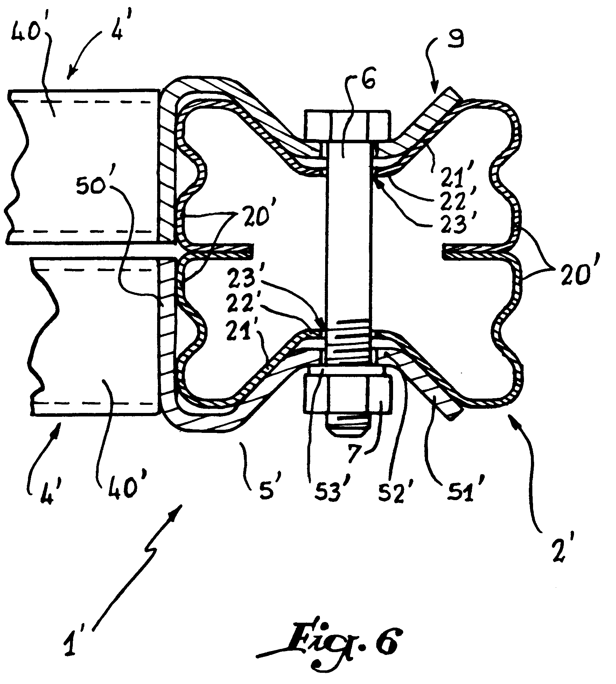

En fig. 6, on a représenté deux consoles 4' qui sont montées du même côté du montant vertical 2' de manière à constituer un support plus large. On constate que l'une des consoles 4' est solidaire d'un talon 9 symétrique au talon 5' de manière à pouvoir fixer les deux consoles 4' au moyen d'un boulon 6-7. Le serrage des deux consoles 4' est effectué de la même manière que précédemment, c'est-à-dire par pincement des voiles de chaque talon 5' et 9 à l'intérieur des voiles 21' du montant vertical 2' .

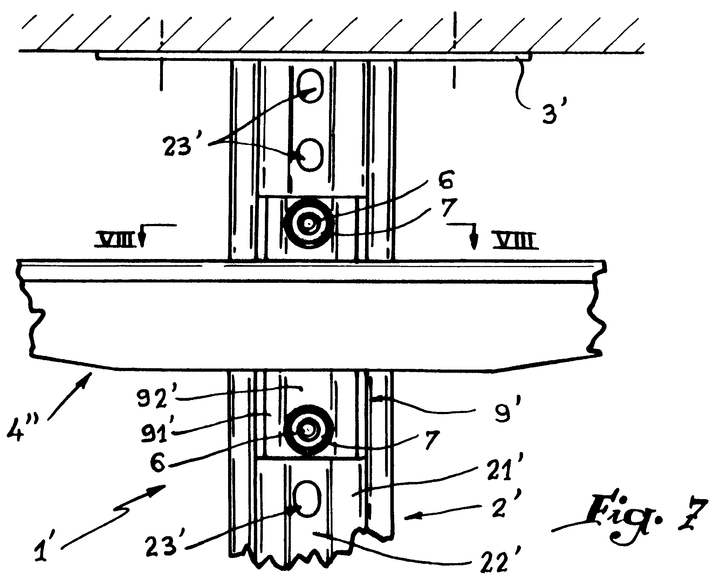

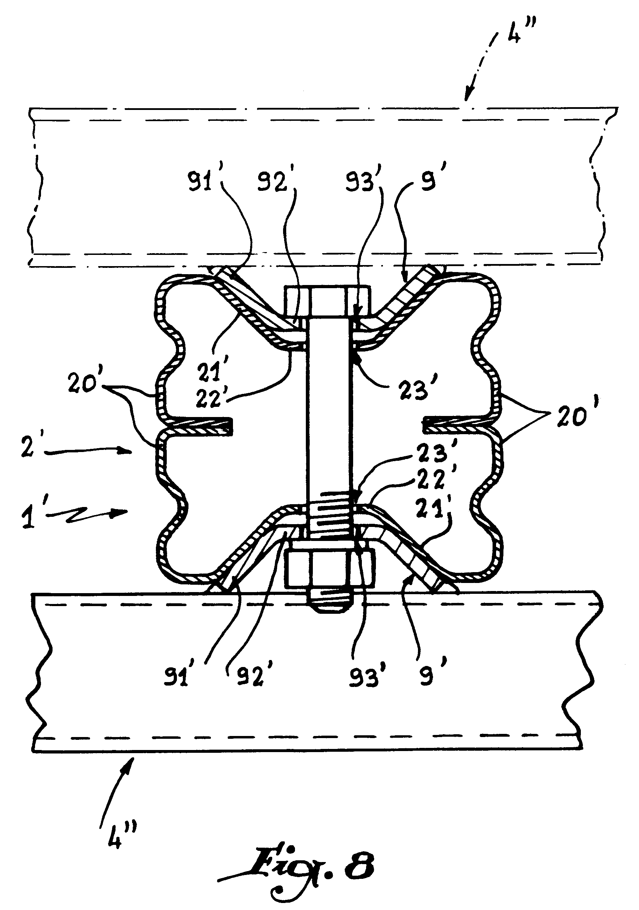

En fig. 7 et 8, on a représenté une seconde variante pour la mise en place d'une console 4'' sur le montant 2' décrit précédemment. La console 4'' comporte sur l'une de ses faces verticales et plus particulièrement en son milieu un talon 9' . Le talon 9' présente un profil complémentaire à celui du voile 21' du montant vertical 2' . En effet, le talon 9' comporte un voile 91' dont la partie centrale 92' se trouve parallèle et légèrement décalée par rapport à l'âme 22' du montant vertical. Cette disposition particulière permet de prévoir des consoles 4'' qui se prolongent de part et d'autre du montant vertical 2' . Chaque partie centrale 92' est percée de trous 93' qui coopèrent avec ceux 23' pour le passage de la vis 6 et de son écrou 7 en vue de la fixation soit au même niveau, soit à des niveaux différents de deux consoles 4''. Le profil complémentaire du voile 91' permet un auto-serrage de la console 4'' par rapport au montant vertical 2' .

On note que le profil des consoles 4' et 4'' peut être prévu identique à celui du montant vertical 2' de manière à ne fabriquer qu'un seul profilé en vue de réduire le coût.

## Revendications

1. Dispositif pour suspendre les chemins de câbles ou toutes autres canalistions pour le transport de l'énergie ou des fluides du genre comportant un montant vertical dont l'âme est percée suivant son axe vertical géométrique d'une série de trous permettant la fixation de consoles qui sont solidaires à l'une de leurs extrémités libres d'un talon, caractérisé en ce que le talon (5, 5' et 9') de chaque console (4, 4' et 4'') est percée d'au moins un trou oblong (53, 53' et 93') qui coopère avec ceux (23, 23') de l'âme (22, 22') pour le passage d'une vis (6) recevant un écrou (7) en vue de la fixation de deux consoles tête-bêche soit au même niveau, soit à des niveaux différents.

2. Dispositif suivant la revendication 1, caractérisé en ce que la partie extrême (52) du talon (5) de chaque console (4) est percée d'un trou oblong et incliné (53) et de plusieurs trous circulaires (54) qui coopèrent respectivement avec ceux (23) de l'âme (22) du montant (2) pour le passage de la vis (6) recevant son écrou (7) en vue de la fixation de deux consoles (4) tête-bêche soit au même niveau, soit à des niveaux différents.

3. Dispositif suivant la revendication 1, carcatérisé en ce que le montant vertical (2) présente un profil en ε comportant des ailes (20) parallèles l'une à l'autre qui sont réunies par un voile (21) en forme de cuvette afin que la partie centrale (22) constitue l'âme dudit montant.

4. Dispositif suivant la revendication 1, caractérisé en ce que le trou oblong et incliné (53) et la paroi (50) du talon (5) réalisent un système auto-bloquant lors du montage de la console (4) sur le montant (2).

5. Dispositif suivant la revendication 1, caractérisé en ce que le talon (5) comporte une paroi (50) solidaire d'un voile (51) qui est conformé de manière que sa partie extrême (52) soit dans un plan perpendiculaire et médian à ladite paroi (50).

6. Dispositif suivant la revendication 1, caractérisé en ce que la paroi verticale (50) du talon (5) est perpendiculaire à la face supérieure (40) de la console (4).

7. Dispositif suivant la revendication 1, caractérisé en ce que le trou oblong et incliné (53) et les trous circulaires (54) de chaque console (4) sont alignés suivant un même axe vertical.

8. Dispositif suivant la revendication 1, caractérisé en ce que le montant vertical (2') est constitué de deux montants (2) fixés l'un à l'autre pour présenter en section un profil sensiblement carré.

9. Dispositif suivant la revendication 8, caractérisé en ce que le montant vertical (2') est symétrique par rapport à son axe de géométrie vertical et qu'il comprend de part et autre de celui-ci des ailes (20') qui sont réunies par un voile (21') en forme de cuvette dont la partie centrale (22') constitue l'âme dudit montant.

10. Dispositif suivant la revendication 1, caractérisé en ce que le talon (5') comporte une paroi (50') solidaire d'un voile (51') qui est conformé de manière que sa partie centrale (52') soit dans un plan perpendiculaire et médian à ladite paroi (50').

11. Dispositif suivant la revendication 1, caractérisé en ce que le talon (9') présente un voile (91') en forme de cuvette dont la partie centrale (92') est parallèle à l'âme (22') du montant vertical (2').

12. Dispositif suivant la revendication 11, caractérisé en ce que le talon (9') est fixé sur l'une des faces verticales de la console (4'') et plus particulièrement en son milieu de manière que ladite console se prolonge de part et d'autre du montant vertical.

13. Dispositif suivant la revendication 10, caractérisé en ce que le talon (5') permet un auto-serrage de la console (4') sur le montant (2') par déformation de son voile (51').

14. Dispositif suivant la revendication 11, caractérisé en ce que le talon (9') permet un auto-serrage de la console (4'') sur le montant (2') par déformation de son voile (91').
